Europäisches Patentamt

European Patent Office

Office européen des brevets

(11) Publication number: **0 017 357**
**B1**

(12) **EUROPEAN PATENT SPECIFICATION**

(45) Date of publication of patent specification: 07.11.84

(51) Int. Cl.³: **F 15 B 15/14,** G 01 K 5/44 // E05C17/30

(21) Application number: 80300750.9

(22) Date of filing: 11.03.80

(54) Temperature responsive control device.

(30) Priority: 30.03.79 GB 7911120

(43) Date of publication of application:
15.10.80 Bulletin 80/21

(45) Publication of the grant of the patent:
07.11.84 Bulletin 84/45

(84) Designated Contracting States:
BE CH DE FR GB IT NL SE

(56) References cited:
FR-A-2 124 200
FR-A-2 239 605
GB-A- 649 423
GB-A- 886 241
GB-A- 962 224
GB-A-1 507 727
GB-A-1 547 417
US-A-2 323 519
US-A-2 826 467
US-A-3 148 595
US-A-4 140 017

(73) Proprietor: THERMOFORCE LIMITED
Wakefield Road
Cockermouth Cumbria CA13 0HS (GB)

(72) Inventor: Cole, Albert
Lynroyd Manor Brow
Keswick Cumbria (GB)

(74) Representative: Livsey, Gilbert Charlesworth
Norris et al
HYDE, HEIDE & O'DONNELL 146 Buckingham
Palace Road
London SW1W 9TR (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a temperature responsive control device which utilises the volumetric expansion and contraction of a wax based substance to operate mechanisms such as bell cranks or linkages, say for controlling ventilators, windows, fanlights, shutters, valves and so forth.

Temperature responsive control devices of this kind have been proposed for example in British Patent Specification No. 886 241 or in United States Patent Specification No. 4 140 017. Such a device essentially includes a straight tubular cylinder containing the expansive substance and, immersed in said substance, a rod which is constituted as a piston and extends into the cylinder through a close fitting guide means incorporating a shaft seal. The piston rod extends axially out of one end of the cylinder and is connected to the mechanism, for example by means of a linkage.

This piston rod must be of a diameter such that on the one hand adequate shaft sealing is obtained (this limiting the minimum dimension) while if the piston rod is large in relation to the diameter of the cylinder, there will be inadequate axial piston movement for a given volumetric change consequent upon change of ambient temperature.

In use the cylinder is adapted to be connected rigidly to a fixed frame with respect to which for instance, the ventilator pane is moveable. For example, the ventilator pane may be a window pivoted on the frame. The linkage is arranged to transmit the moveable pane the axial movements performed by the piston rod, on expansion or contraction of the temperature responsive substance contained within the cylinder.

The linkage is arranged to transmit these movements at a high leverage of say 10:1 or more (with 1 cm of piston movement corresponding to at least 10 cm of movement of the moveable pane relative to the fixed frame). If then a force of 100 N is required to move the window pane, a corresponding force of 1 kN must be exerted on and by the piston.

The piston rod is then required to move axially when subjected to high axial loadings transmitted through the linkage. In the United States Patent Specification referred to above, the piston passes through a bush carried in the cylinder which bush has a bore which serves as a guide means for supporting the piston for axial movement and this bore housed also shaft sealing means for engaging about the piston and for preventing the extrusion of the substance which expands when heated. Good sealing and guidance could only be obtained at the expense of high friction or stiction forces tending to prevent fast response to temperature change. Good sealing may be adversely affected by rough treatment of the shaft seal during installation.

The thermally expansive substance within the cylinder is commonly a mixture of paraffin wax and petroleum jelly. Upon expanding it may generate pressures of 35 N/mm² or more. The shaft seal bears tightly upon the piston and so contributes frictional forces which have to be overcome when the piston is moved axially. However, in the known device these frictional forces are supplemented by lateral forces due to the geometry of the linkage arranged to transmit forces from and to the actuator, which lateral forces generate further friction in the guide means supporting the piston for axial sliding movement.

The invention starts out from a temperature responsive control device of the kind known from United States Patent Specification No. 4 140 017 which utilizes a wax based substance which has liquid properties and a high coefficient of expansion, which substance is located within a cylinder between two end closures which admit expansion and contraction of the substance, a piston passing through a shaft seal of one of the end closures and having one end immersed in said substance and its other end operatively connected to a first load element by way of a high leverage operating linkage, the cylinder being connected to a second load element, the device effecting relative movement between said load elements with changes of temperature.

One object of this invention is to provide a device of this kind which is adjustable in its position of use, arranged for the opening and closing of a window for example, with such adjustment, when effected, having no adverse effect upon the functioning of the device by altering the frictional forces which might tend to oppose piston movements.

A further disadvantage which arises with the known device is due to the fact that during installation the piston is often moved much more rapidly than when the device is functioning in its operative installed condition. This has in some cases adversely affected the seals and has led to a reduction in their durability. A further object of the present invention is therefore to provide a device in which the likelihood of seal damage due to the piston being moved rapidly to-and-fro during installation is reduced.

For the purpose of improving the device of the kind known from United States Patent Specification No. 4 140 017, this invention provides, firstly, that both end closures for the wax based substance within the cylinder are constituted by moveable end plugs which are each equipped with peripheral sliding seals engaging with the wall of the cylinder so that both end plugs are adjustable axially of the cylinder and secondly, in order to prevent reduction of the sealing efficiency of the peripheral seal and of the shaft seal of that end plug through which the piston passes, that the piston bears with its outboard end upon the inboard end of a push rod which is guided with regard to the cylinder and which can be moved separately and independently from the piston and which can transmit forces to the piston and to the end plug only axially.

In a device according to this invention, the design of the cylinder and the shaft seal can now be chosen such as to obtain a fast response to volumetric expansion coupled with adequate sealing and adequate axial movement of the piston. The problems of friction or so-called "stiction" are no longer accentuated by the generation of non-axial forces in a bearing or guide for the piston itself intended to cater for axial forces. The push rod and the piston rod may be of different materials and may have different diameters and although they will be in general alignment, exact alignment of the two, although desirable, is of no great importance. The piston will be of high quality corrosion resistant steel. As the piston rod is not now directly connected to the load, the piston rod may well be protected from dirt and corrosive effects of the environment. All this prolongs seal life.

Preferably the guiding means for the push rod are constituted by a bore in a cap screwed to one end of the cylinder and, furthermore, a stop is provided on each of the piston and the push rod to ensure that the end to end abutting interface between the two is maintained within the cylinder between the guiding means for the push rod and the piston. In this way the abutting interface is maintained within a space which is shielded from the environment.

The invention will be described by way of example with reference to the accompanying drawings in which:

Figure 1 shows diagrammatically a temperature responsive device as fixed in a known operative arrangement for controlling pivotal movement of a ventilator pane relative to a fixed frame.

Figure 2 is a cross-sectional view of the device according to the invention; while

Figure 3 is a detailed view, also in cross-section, of part of the device shown in Figure 2.

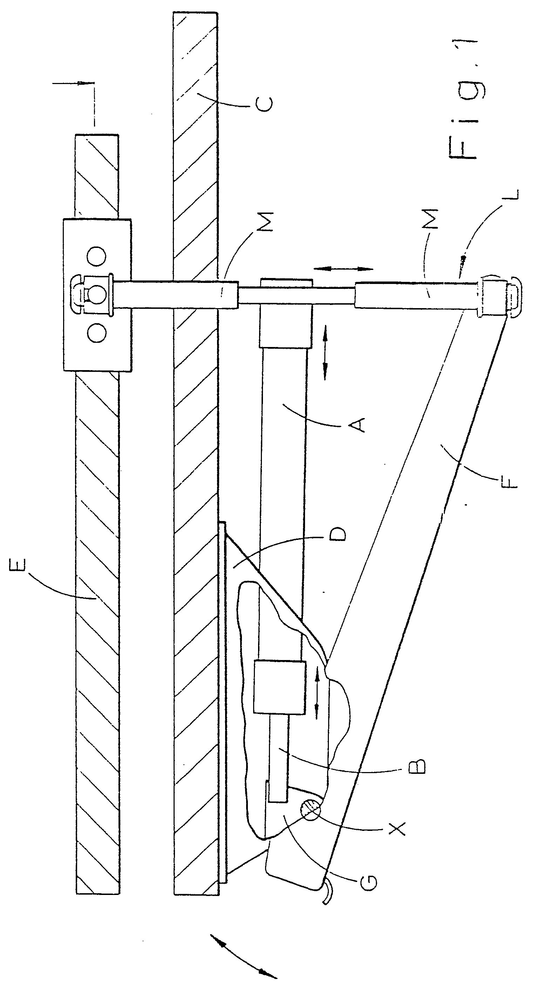

Referring first to Figure 1, there is here shown a known operative arrangement between first and second load elements for a temperature responsive control device. As shown, it comprises a cylinder unit A which is filled with a substance which expands volumetrically as its temperature rises to expel a shaft B. The cylinder unit A is clamped to a second load element, viz. a frame member C, by means of a bracket D. Pivotally mounted on frame member C is the first load element, viz. a ventilator pane E. A crank F is pivotally mounted on bracket D to move about an axis X. The shaft B is connected to the crank F at joint G, and the free end of the crank F is connected to the pane E by an articulated linkage L whose length is adjustable by an adjustment device of any known kind, generally indicated at M. A return spring (not shown) is usually provided and which tends to turn crank F clockwise as seen on the drawing, such as to urge shaft B inwardly of cylinder unit A.

It will be noted from Figure 1 that the crank F has a long arm and a short arm such that the load from the pane E is transmitted to the shaft B at a leverage of approximately 10:1. Moreover, it will be noted that the pivotal connection at joint G performs an arcuate movement about the pivotal axis X of the crank F. Due to this arcuate movement the shaft B is subjected to lateral loads in addition to the axial loads transmitted between the cylinder unit A and the ventillator pane E.

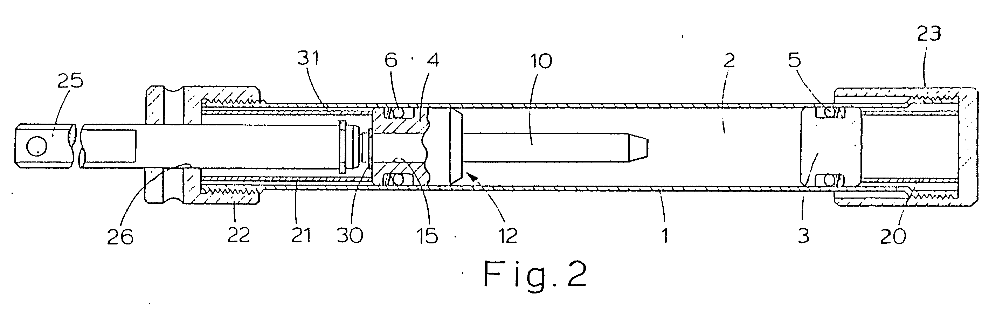

Referring now to Figure 2, there is here shown a control device according to the invention. It comprises a cylinder 1 which contains a substance 2 which expands with increasing temperature. A suitable substance would be a mixture of wax and petroleum jelly whose volume will increase by approximately 15% as its temperature rises from 10°C to 55°C.

The substance is contained within the cylinder 1 between two axially movable plugs 3 and 4, each provided with sealing means generally designated 5 and 6 operating as a sliding seal between their external peripheries and the cylindrical wall of the cylinder 1. Typically, the sealing means 5 and 6 are constituted by an O-ring of elastomeric material supported at least on the low pressure side by anti-extrusion rings of polytetrafluorethylene (p.t.f.e.). The plugs 3 and 4 are of metal and are spaced from the ends of the cylinder 1 by means of metal sleeves 20 and 21 and threaded metal cap nuts 22 and 23. The cap nuts 22 and 23 may be screwed with respect to the threaded ends of the cylinder 1 to effect adjustment of the spacing between the plugs 3 and 4 and hence the volume within the cylinder 1 available for the substance 2.

A piston rod 10 extends axially through a central bore of the plug 4. A shaft seal, generally designated 12, is disposed within the plug 4 and seals about the piston 10 which is of high quality corrosion resistant steel, machined cylindrical to have clearance fit in the bore 15 of the plug 4. This bore constitutes an elongate bearing for guiding the piston 10 in its axial sliding movement. The inboard end of the piston 10 is immersed in the substance 2.

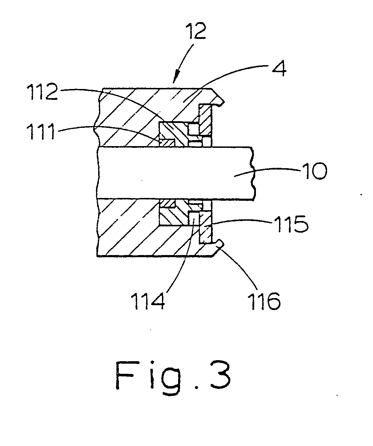

The seal 12 is shown in detail in Figure 3 and comprises two rings surrounding the piston 10. Firstly, there is a ring 111 of p.t.f.e. which bears directly upon the piston 10. Surrounding the ring 111 is a second ring 112 of nitrile rubber. These two rings are located in a cylindrical cavity 114 formed within the plug 4 at the inner end of its through bore 15. The rings are also held within the cavity by a washer 115, suitably of brass, which is trapped behind a turned-over lip 116 at the extremity of the cavity 114.

An important part of the sealing function is effected by a portion of the elastomeric ring 112 which extends into annular contact with the piston 10. The thermally responsive substance 2, when expanding, acts against this portion of the ring 112 and forces are generated in the elastomeric body so that it is urged against the walls of the cavity 114, against the anti-extrusion ring 111 and against the piston 10. When the substance 2 contracts, a residual hydrostatic sealing effect will be obtained from those forces which tend to urge the piston 10 inwardly of the cylinder. These forces may be loadings due inter alia to the return spring mentioned above acting upon the piston 10. However occurring, the pressures across the ring 112 will be of a low order when the substance 2 contracts.

According to a principal feature of the invention a separate push rod 25 is provided. The cap 22 has an axial opening constituting an elongate bearing 26 through which the cylindrical push rod 25 is guided for axial sliding movement. The inner end of the push rod 25 bears in metal-to-metal abutting contact with the end of the piston 10. The abutment interface may be lubricated.

The cylinder is adapted to be fixed to a frame. For example, its cap nut 22 will be fixed to the bracket D in Figure 1. The push rod 25 will then take the place of the shaft B of Figure 1 and will be pivotally connected to the crank F.

The axial passage in the cap 22 will constitute a sliding bearing for supporting axial movement of the push rod 25 and lateral forces transmitted to the push rod 25 will be supported by the cap 22 and will be transmitted to the piston 10 only to a minor and acceptable extent. It will be appreciated that exact axial alignment of the piston 10 with the push rod 25 is not necessary and accordingly it is unnecessary to provide exact axial alignment between the bores in the cap 22 and the plug 4. As the shaft seal 12 in the plug 4 is not required to support significant lateral loadings, it can be much smaller than if lateral loadings were to be experienced. Consequently the piston 10 can be made of relatively small diameter such that on the one hand adequate sealing is obtained around its periphery by the gland seal 12, while advantageously the piston will be small enough in relation to the diameter of the cylinder 1 that as the substance 2 expands or contracts the piston will perform useful working movements.

Rapid response to temperature change will be achieved if the diameters of the piston 10 and of the shaft seal 12 engaging therewith are small so that the friction is low.

In a typical arrangement the bores 15 and 26 will each have an axial length of 10 mm, while the cylinder 1 might have an internal diameter of 15 mm and the piston might have a diameter of 5 mm. The push rod 25 might have a diameter of 7.5 mm. A typical volume for the substance 2 might be 25 cm$^3$ at 10°C, and when the temperature of the substance 2 increases from 10°C to 55°C its volume may increase to 28.75 cm$^3$ and so that a force of up to 35 N/mm$^2$ may be generated urging the piston 10 outwardly over a working stroke of say 2 to 3 cm.

The maximum stroke is governed by stop rings or circlips 30 and 31 provided on the piston 10 and push rod 25. These maintain the inboard end of the piston 10 immersed in the substance 2 and the abutting interface between cap 22 and plug 4.

The threaded caps 22 and 23 will allow adjustment during installation and the cap 23 may be rotated after installation to give adjustment as required for temperature calibration.

**Claims**

1. A temperature responsive control device which utilizes a wax based substance (2) which has liquid properties and a high coefficient of expansion which substance is located within a cylinder (1) between two end closures which admit expansion and contraction of the substance, a piston (10) passing through a shaft seal (6) of one of the end closures and having one end immersed in said substance and its other end operatively connected by way of a high leverage operating linkage with a first load element, the cylinder being connected to a second load element, the device effecting movement between said load elements with changes of temperature, characterised in that firstly both end closures for the wax based substance (2) within the cylinder (1) are constituted by movable end plugs (3 and 4) which are each equipped with peripheral sliding seals (5, 6) engaging with the wall of the cylinder (1) so that both end plugs (3, 4) are adjustable axially of the cylinder (1), and secondly in order to prevent reduction of the sealing efficiency of the peripheral seal (6) and of the shaft seal (12) of that end plug (4) through which the piston (10) passes, the piston (10) bears with its outboard end upon the inboard end of a push rod (25) which is guided with regard to the cylinder and which can be moved separately and independently from the piston and which can transmit forces to the piston (10) and to the end plug (4) only axially.

2. A device according to claim 1 characterised in that the guiding means (26) for the push rod (25) are constituted by a bore in a cap (22) screwed to one end of the cylinder (1) and in that a stop is provided on each of the piston (10) and the push rod (25) to ensure that the end to end abutting interface between the two is maintained within the cylinder (1) between the guiding means for the push rod (25) and the piston (10).

3. A device according to claim 2 characterised in that the guiding means (26) supporting the push rod (25) has an axial length which is at least as long as the diameter of the rod but not more than twice the diameter.

4. A device according to claim 2 characterised in that the guiding means supporting the piston (10) has an axial length which is at least twice the diameter of the piston.

5. A device according to claim 2 characterised in that the stop means on the push rod (25) and on the piston (10) are circlips (31, 30).

6. A device according to any one of the preceding claims characterised in that the movable end plug (4) through which the piston (10) passes is adjustable as to its position axially of and within the cylinder (1).

7. A device according to any one of the preceding claims characterised in that the movable end plug (3) located in the cylinder (1) separated from the piston (10) by the thermally expansive substance (2) is adjustable as to its position axially of and within the cylinder (1).

**Revendications**

1. Un dispositif de commande sensible à la température qui utilise une substance à base de paraffine (2) qui a des propriétés liquides et un coefficient de dilatation élevé, cette substance se trouvant à l'intérieur d'un cylindre (1) entre deux éléments de fermeture d'extrémité qui admettent une dilatation et une contraction de la substance, un piston (10) traversant un joint d'étanchéité d'axe (6) de l'un des éléments de fermeture d'extrémité et ayant une extrémité immergée dans ladite substance, et son autre extrémité accouplée fonctionnellement à un premier élément de charge, au moyen d'un mécanisme articulé ayant un rapport de multiplication de mouvement élevé, le cylindre étant accouplé à un second élément de charge, le dispositif effectuant un mouvement entre ces éléments de charge sous l'effet de changements de température, caractérisé en ce que, premièrement, les deux éléments de fermeture d'extrémité pour la substance à base de paraffine (2) qui se trouve à l'intérieur du cylindre (1) sont constitués par des tampons d'extrémité mobiles (3 et 4), chacun d'eux étant équipé de joints d'étanchéité périphériques glissants (5, 6) qui sont en contact avec la paroi du cylindre (1), afin de permettre de régler les deux tampons d'extrémité (3, 4) dans la direction axiale du cylindre (1) et, secondement, pour éviter une diminution de l'efficacité d'étanchéité du joint d'étanchéité périphérique (6) et du joint d'étanchéité d'axe (12) du tampon d'extrémité (4) que traverse le piston (10), le piston (10) porte par son extrémité (4) que traverse le piston (10), le piston (10) porte par son extrémité extérieure sur l'extrémité intérieure d'un poussoir (25) qui est guidé par rapport au cylindre et qui peut être déplacé séparément et indépendamment du piston, et qui peut transmettre des forces au piston (10) et au tampon d'extrémité (4) uniquement en direction axiale.

2. Un dispositif selon la revendication 1, caractérisé en ce que les moyens de guidage (26) pour le poussoir (25) sont constitués par un alésage dans un bouchon (22) vissé sur une extrémité du cylindre (1), et en ce qu'une butée est formée sur le piston (10) et sur le poussoir (25) pour faire en sorte que la jonction d'aboutement entre les deux soit maintenue à l'intérieur du cylindre (1) entre les moyens de guidage pour le poussoir (25) et le piston (10).

3. Un dispositif selon la revendication 2, caractérisé en ce que les moyens de guidage (26) qui supportent le poussoir (25) ont une longueur axiale qui est au moins aussi grande que le diamètre du poussoir mais qui n'est pas supérieure au double du diamètre.

4. Un dispositif selon la revendication 2, caractérisé en ce que les moyens de guidage supportant le piston (10) ont une longueur axiale qui est au moins égale au double du diamètre du piston.

5. Un dispositif selon la revendication 2, caractérisé en ce que les moyens de butée sur le poussoir (25) et sur le piston (10) sont des circlips (31, 30).

6. Un dispositif selon l'une quelconques des revendications précédentes, caractérisé en ce que le tampon d'extrémité mobile (4) que traverse le piston (10) est réglable en position axiale par rapport au cylindre (1) et à l'intérieur de ce dernier.

7. Un dispositif selon l'une quelconque des revendications précédentes, caractérisé en ce que le tampon d'extrémité mobile (3) qui se trouve dans le cylindre (1) en étant séparé du piston (10) par la substance se dilatant sous l'effet de la chaleur (2), est réglable en position axiale par rapport au cylindre (1) et à l'intérieur de ce dernier.

**Patentansprüche**

1. Auf Temperatur ansprechende Betätigungsvorrichtung, bei der Substanz (2) auf Wachsbasis verwendet wird, die Flüssigkeitseigenschaften hat und einen hohen Ausdehnungskoeffizienten besitzt, bestehend aus einem Zylinder (1), der die Substanz (2) enthält und zwei Endverschlüsse aufweist, und aus einem Kolben (10), der durch eine Stangendichtung (6) eines der Endverschlüsse hindurchläuft, mit einem Ende in die Substanz eintaucht und dessen anderes Ende über ein Gelenksystem mit großem Hebelverhältnis mit einem ersten Last-Element verbunden ist, wobei der Zylinder mit einem zweiten Last-Element verbunden ist und die Steuervorrichtung bei Temperaturänderungen eine Bewegung der beiden Last-Elemente bewirkt, dadurch gekennzeichnet, daß einerseits beide Endverschlüsse für die Substanz (2) auf Wachsbasis innerhalb des Zylinders (1) von bewegbaren Endstopfen (3 und 4) gebildet werden, die mit peripherischen Gleitdichtungen (5, 6) ausgerüstet sind, die die Wand des Zylinders (1) berühren, so daß beide Stopfen (3, 4) in axialer Richtung des Zylinders (1) justierbar sind, und daß zwecks Verhinderung der Reduktion der Dichtwirkung der peripherischen Dichtung (6) und der Stangendichtung (12) des Stopfens (4), durch den die Kolbenstange (10) hindurchläuft, die Kolbenstange (10) mit ihrem äußeren Ende gegen das innere Ende einer Stoßstange (25) stößt, die in bezug auf den Zylinder (1) geführt wird, getrennt und unabhängig von der Kolbenstange bewegt werden kann und die Kräfte auf die Kolbenstange (10) und auf den Stopfen (84) nur in axialer Richtung übertragen kann.

2. Auf Temperatur ansprechende Betätigungsvorrichtung nach Anspruch 1, dadurch gekennzeichnet, daß die Führungsorgane (26) für die Stoßstange (25) von einer Bohrung in einer Kappe (22) gebildet werden, die auf das eine Ende des Zylinders (1) aufgeschraubt ist, und daß je ein Anschlag an der Kolbenstange (10) und der Stoßstange (25) vorgesehen sind, die bewirken, daß die Anschalgfläche zwischen beiden Stangen im Zylinder (1) zwischen den Führungsorganen für die Stoßstange (25) und die Kolbenstange (10) gehalten wird.

3. Auf Temperatur ansprechende Betätigungsvorrichtung nach Anspruch 2, dadurch gekennzeichnet, daß das Führungsorgan (26) für die Stoßstange (25) eine axiale Länge hat, die wenigstens so lang wie der Durchmesser der Stange, aber nicht länger als das Zweifache des Durchmessers ist.

4. Auf Temperatur ansprechende Betätigungsvorrichtung nach Anspruch 2, dadurch gekennzeichnet, daß das Führungsorgan für die Kolbenstange (10) eine axiale Länge hat, die mindestens das Zweifache des Durchmessers der Kolbenstange ist.

5. Auf Temperatur ansprechende Betätigungsvorrichtung nach Anspruch 2, dadurch gekennzeichnet, daß die Anschläge auf der Stoßstange (25) und der Kolbenstange (10) Ringclips (31, 30) sind.

6. Auf Temperatur ansprechende Betätigungsvorrichtung nach einem oder mehreren der Ansprüche 1 bis 5, dadurch gekennzeichnet, daß der bewegbare Endstopfen (4), durch den die Kolbenstange (10) hindurchgeht, hinsichtlich seiner axialen Lage bezüglich des Zylinders (1) und im Zylinder justierbar ist.

7. Auf Temperatur ansprechende Betätigungsvorrichtung nach einem der Ansprüche 1 bis 6, dadurch gekennzeichnet, daß der Bewegbare Endstopfen (3), der im Zylinder (1) angeordnet ist und von der Kolbenstange (10) durch die thermisch expansive Substanz getrennt ist, hinsichtlich seiner axialen Lage bezüglich des Zylinders (1) und im Zylinder justierbar ist.

Fig.1

Fig. 2

Fig.3